# EUROPÄISCHE PATENTSCHRIFT

(11) **EP 2 661 475 B1**
(45) Veröffentlichungstag und Bekanntmachung des Hinweises auf die Patenterteilung: **11.03.2015**
(21) Anmeldenummer: 12706186.9
(22) Anmeldetag: 03.01.2012
(51) Int. Cl.: C10B 1/04, C10B 53/07, C10G 1/10

(54) **THERMALREAKTOR**
THERMAL REACTOR
RÉACTEUR THERMIQUE

(30) Priorität: 05.01.2011 DE 102011000037
(43) Veröffentlichungstag der Anmeldung: 13.11.2013
(73) Patentinhaber: Pyrum Innovations International S.A., 1150 Luxembourg (LU)
(72) Erfinder: SCHULZ, Klaus-Peter, 79424 Auggen (DE)
(74) Vertreter: Wieske, Thilo
(86) Internationale Anmeldenummer: PCT/DE2012/100002
(87) Internationale Veröffentlichungsnummer: WO 2012/092924

(56) Entgegenhaltungen:
- WO-A1-2010/127664
- GB-A- 1 558 895
- JP-A- 2009 166 040

## Beschreibung

Die Erfindung betrifft einen Thermalreaktor zum kontinuierlichen thermolytischen Recycling von Altreifen-, Vulkanisationsrückstands- und Altkunststoffgranulaten und ähnlichen Produkten, wobei der Thermalreaktor ein Einlaufteil, ein Heizzonenmittelteil und ein Auslaufteil aufweist, die vertikal untereinander angeordnet sind.

Dem Stand der Technik nach erfolgt das wertstoffliche Recycling von Altreifen-, Vulkanisationsrückstands- und Altkunststoffgranulaten überwiegend in Drehtohrreaktoren, seltener in Wirbelschicht-, Fließbett- oder Flugstromreaktoren, weil diese sich noch in der Entwicklungsphase befinden. So genannte Schacht- bzw. Vertikalreaktoren wurden bisher überwiegend als Wärmetauscher zur Erwärmung, Sinterung und Kühlung von rieselfähigen Schüttgütern bzw. zur Pyrolyse von organischen Abfällen zur Erzeugung von Ersatzbrennstoffen genutzt. Aus der WO 2010/127664 A1 sind ein mehrstufiges, energieautarkes und kontinuierlich arbeitendes Pyrolyseverfahren zur fraktionierten Rückgewinnung von Wertstoffen und Energie aus rieselfähigen, hochmolekular vernetzten organischen Verbindungen, insbesondere aus Altreifen-, Dichtungsprofilund sonstiger Kunststoffgranulate, sowie eine Vorrichtung zur Durchführung des Verfahrens bekannt. Um ein energieautarkes, kontinuierlich arbeitendes Pyrolyseverfahren für rieselfähige organische Granulate gemäß dem Oberbegriff zu entwickeln, wird dort vorgeschlagen, daß die Granulate einen vertikalen, mehrstufigen Pyrolysereaktor von oben nach unten gravimetrisch durchlaufen, wobei sie auf stufenweise unterschiedlich einstellbare Verfahrenstemperaturen im Bereich von 300 bis 1.200 °C erwärmt und pyrolysiert werden. Eine sich anschließende franktionierte Kondensation der Pyrolysedämpfe bewirkt eine Rückgewinnung von Öl- und Gasverbindungen und eine nach geschaltete motorische Nutzung des Pyrolysegases erzeugt die für den Pyrolyseprozess erforderliche Energie.

Aufgabe der vorliegenden Erfindung ist es, einen kontinuierlich arbeitenden Thermalreaktor für ein solches Pyrolyseverfahren zu entwickeln, der es ermöglicht, ohne zusätzliche motorisch rotierende Förder- und Mischeinrichtungen oder pneumatische Auflockerungseinrichtungen Altreifen-, Vulkanisationsrückstands- und Altkunststoffgranulate einem kontinuierlichen thermolytischen Recycling zu unterziehen.

Diese Aufgabe wird erfindungsgemäß dadurch gelöst,
- daß der Thermalreaktor ein Einlaufteil, ein Heizzonenmittelteil und ein Auslaufteil aufweist, die vertikal untereinander angeordnet sind,
- daß im Heizzonenmittelteil zentral im Thermalreaktor ein Absaugrohr angeordnet ist, dessen Manteloberfläche zahlreiche Bohrungen und/oder Schlitze zum Ableiten der entstehenden kurzkettigen Kohlenwasserstoffverbindungsdämpfe aufweist und wobei auf das Absaugrohr, übereinander angeordnete kegelförmige Glocken aufgeschoben sind und wobei Mittel zum Absaugen der Kohlenwasserstoffverbindungsdämpfe aus dem Absaugrohr vorgesehen sind, und
- daß im Heizzonenmittelteil am Außenmantel eine Vielzahl von radial angeordneten Heizplatten angeordnet sind, die in den übereinander liegenden Heizetagen versetzt zueinander angeordnet sind.

Es hat sich im Rahmen der Erfindung gezeigt, daß es trotz der schlechten Wärmeleitung dieser Stoffe mit einem derartigen Vertikal-Thermalreaktor möglich ist, im kontinuierlichen Betrieb Altreifen-, Vulkanisationsrückstands- und Altkunststoffgranulate zu recyclen, da sie einer homogenen Durchmischung und Erhitzung unterzogen werden. Die Stoffe durchlaufen den Vertikal-Thermalreaktor von oben nach unten in sauerstoffarmer und unterhalb des Atmosphärendruckes liegenden Atmosphäre und werden dabei thermisch in kurzkettige dampfförmige Kohlenwasserstoffverbindungen und in Feststoffe (Koks) gespalten, die wertvolle Rohstoffe darstellen.

Im Einlaufteil erfolgt der dosierte Materialeintrag in den Thermalreaktor. In dem Heizzonenmittelteil erfolgt eine fraktionierte Separation der entstehenden Thermolyseprodukte in Feststoff und Dampf bei Temperaturen, die vorzugsweise zwischen 500°C und 600°C liegen, wobei die Kohlenwasserstoffverbindungsdämpfe in dem Heizzonenmittelteil abgesaugt und anschließend zu Ölverbindungen mit unterschiedlichen Zusammensetzungen und zu Permanentgas auskondensiert werden. In dem Auslaufteil sammelt sich der bei dem Thermolyseprozeß anfallende, koksartige Feststoff an und wird über einen Feststoffaustritt aus dem Thermalreaktor abgezogen.

Es liegt im Rahmen der Erfindung, daß sowohl in einer Heizetage als auch von einer Heizetage zur benachbarten Heizetage kurze und lange Heizplatten alternierend angeordnet sind.

Diese Maßnahme bewirkt mit der versetzten Anordnung der Heizplatten eine gute Durchmischung und homogene Erwärmung des Materials.

Eine bevorzugte Weitergestaltung der Erfindung besteht darin, daß die Heizplatten in Schlitze entsprechender Größe im Außenmantel des Thermalreaktors einschiebbar und aus diesen Schlitzen entnehmbar sind.

Dies ermöglicht eine schnelle Wartung bzw. einen schnellen Austausch von defekten Heizplatten.

Es ist vorteilhaft, daß die Heizplatten elektrisch beheizbar sind.

In diesem Zusammenhang ist es vorteilhaft, daß Mittel zum Steuern des Temperaturprofils in dem Thermalreaktor und zum individuellen Einstellen der Temperatur jeder Heizplatte vorgesehen sind.

Weiterhin besteht eine Ausbildung der Erfindung darin, daß die Mittel zum Absaugen der Kohlenwasserstoffverbindungsdämpfe aus dem Absaugrohr als Dampfaustrittsstutzen ausgebildet sind, der mit einer Polykondensationseinheit verbunden ist.

Nachfolgend wird die Erfindung anhand von Zeichnungen näher beschrieben.

Es zeigen
- Figur 1: einen Längsschnitt eines erfindungsgemäßen Thermalreaktors ohne Katalysatorvorrichtung,
- Figur 2: einen Querschnitt (Schnitt A-A) im oberen Teil des Thermalreaktors gemäß Figur 1,
- Figur 3: eine Abwicklung des Außenmantels des erfindungsgemäßen Thermalreaktors mit der Anordnung der versetzten Heizplattenetagen,
- Figur 4 und Ansicht A: eine elektrisch beheizte Wärmetauscherplatte sowie eine Detailansicht derselben,
- Figur 5: einen Längsschnitt eines erfindungsgemäßen Thermalreaktors mit zusätzlicher Katalysatorvorrichtung.

Der Thermalreaktor (1) ist erfindungsgemäß als vertikales, mehrteilig geflanschtes Druckgefäß ausgeführt. Er besteht auf Grund seiner hohen Temperaturbelastung komplett aus wärmebeständigem Stahl bzw. Legierungen wie zum Beispiel 1.4828, 1.4841, AVESTA 253 MA, Nicrofer 45 TM oder ähnlichen Werkstoffen.

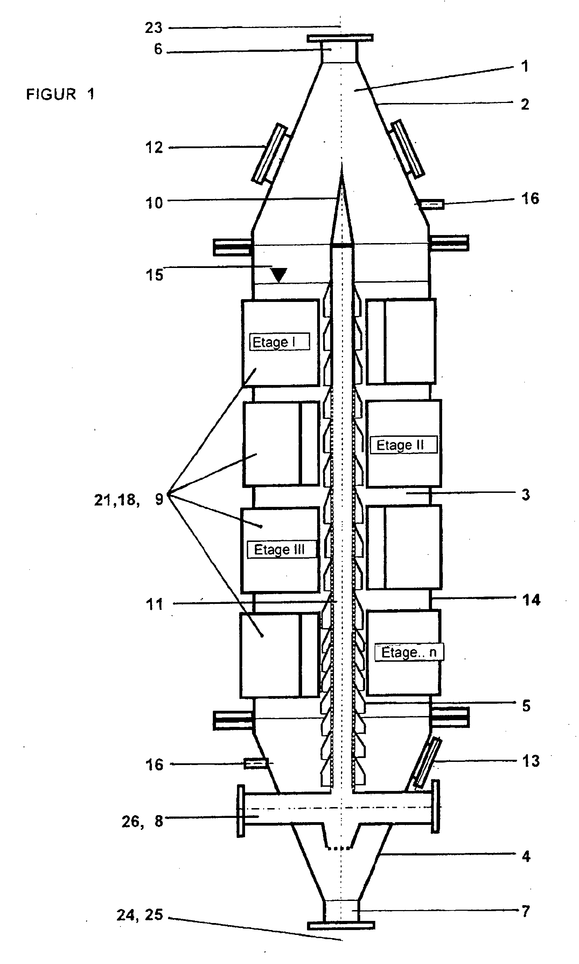

Die Figur 1 zeigt einen Längsschnitt durch den erfindungsgemäßen Thermalreaktor (1) und lässt das Grundprinzip der Konstruktion erkennen. Der Thermalreaktor (1) weist (von oben nach unten betrachtet) ein kegelstumpfförmiges Einlaufteil (2) auf, an das sich ein zylinderförmiges Heizzonenmittelteil (3) anschließt, welches schließlich in ein kegelstumpfförmiges Auslaufteil (4) übergeht.

Um ein für die Thermolysetechnologie unerwünschtes Eindringen von Sauerstoff in den Thermalreaktor (1) zu minimieren, erfolgen der Granulatein- und -austrag in und aus den Reaktor (1) erfindungsgemäß über ein Materialeintragssystem (23). Es besteht vorzugsweise aus einer druckstoßfesten Zellradschleuse mit leicht demontierbarem Rotor, einer über Frequenzumformer möglichen Drehzahlregelung und einem Inertisierungsanschluß, kombiniert mit einem Absperrschieber für Schüttgüter.

Von einem sich oberhalb des Reaktors (1) befindlichen Granulatvorratsbehälter werden die Granulate über den Feststoffeintrittsstutzen (6) in den Thermalreaktor (1) dosiert eingetragen. Ein Materialverteiler (10) bewirkt eine gleichmäßige Verteilung der Granulate über den gesamten kreisförmigen Querschnitt des Reaktors (1). Je nach Korngröße und Materialart bildet sich im Inneren des Thermalreaktors (1) eine Schüttschichtsäule aus, die sich in Folge der Gravitation kontinuierlich von oben nach unten durch den Thermalreaktor (1) bewegt. Die Granulatsäule wird durch den zylindrischen Außenmantel (14), die inneren Einbauten (5), die alternierend radial am Außenmantel (14) angeordneten langen und kurzen Heizplatten (9), die in den Innenraum des Reaktors (1) ragen, sowie der Füllstandshöhe im Reaktor (1) begrenzt.

Durch die radiale Anordnung der Heizplatten (9) und die versetzte Anordnung dieser in den übereinander liegenden Heizetagen, wird die Granulatsäule in kleine, tortenstückartige Sektionen geteilt. Eine gute Durchmischung der Granulate und damit eine gleichmäßige Erwärmung dieser erfolgt einerseits durch die versetzte Anordnung von langen und kurzen Heizplatten (9) und andererseits durch die inneren Einbauten (5) im Heizzonenteil (3) des Thermalreaktors (1), die als Verdrängungs- und Umwälzkörper ausgeführt sind und eine Vergleichmäßigung des Geschwindigkeitsprofils der Granulate im Thermalreaktor (1) bewirken.

Durch den zwangsweisen und innigen Kontakt der Granulate mit den vorzugsweise elektrisch beheizten Heizplatten (9) können diese auf einstellbare Reaktionstemperaturen von bis zu 950°C stufenlos erwärmt und thermisch gespalten werden. Die Reaktionstemperaturen werden über ein Prozeßleitsystem (21) in Abhängigkeit von der Materialart, der Granulatgröße und deren Wärmeleitungseigenschaften gesteuert. Das Temperaturprofil im Thermalreaktor (1) kann dabei über den Reaktorquerschnitt und die Höhe des gesamten Heizzonenmittelteils (3) variiert und die Temperatur jede Heizplatte (9) kann individuell geregelt werden.

Die Füllstandshöhe des Granulates im Thermalreaktor (1) wird über eine γ-Füllstandsmessund Regeleinrichtung (15) erfaßt und geregelt. Die Verweilzeit der Granulate im Thermalreaktor (1) bei einer vorgegebenen Reaktionstemperatur und damit der Aufspaltungsgrad der Mehrfachbindungen der Kohlenwasserstoffverbindungen werden ebenfalls durch das Prozeßleitsystem (21) automatisch erfaßt und gesteuert.

Auf dem mittig im Thermalreaktor (1) eingebauten zentralen Absaugrohr (11) befinden sich auf der Manteloberfläche zahlreiche Bohrungen und/oder Schlitze, die die entstehenden kurzkettigen Kohlenwasserstoffverbindungsdämpfe ableiten. Es entsteht eine Querströmung dieser Dämpfe zum Feststoffstrom, also ein Kreuzstrom. Die Absaugöffnungen werden durch auf das Absaugrohr (11) aufgeschobene, übereinander angeordnete kegelförmige Glocken, den so genannten inneren Einbauten (5) überdeckt und abgeschirmt, damit keine Granulate oder Staub mit abgesaugt werden können. Die bei der Thermolyse entstehenden Dämpfe können durch die offene Unterseite der Glocken zu den Absaugöffnungen und durch diese in das Absaugrohr (11) eintreten. Die Dämpfe gelangen dann mittels Unterdruck von durchschnittlich -50 mbar bis -75 mbar über den Dampfaustritt (8) zu einer Polykondensationseinheit (26), wo sie zu Ölverbindungen mit unterschiedlicher Zusammensetzung, Viskositäten, Heizwerten und zu Permanentgas auskondensiert werden.

Der bei dem Thermolyseprozeß von Altreifengranulat entstehende Feststoffanteil von ca. 45 bis 52 Gew.-% in Form von Koksgranulaten besteht zu ca. 70 bis 90 % aus reinem Kohlenstoff und zu ca. 10 bis 25 % aus anorganischen Füllstoffen, die den Neureifen bei der Herstellung zugegeben wurden. Der mittlere Heizwert Hᵤ beträgt ca. 23 bis 30 MJ/kg und die mittlere BET-Oberfläche ca. 80 bis 120 m²/g. Das Koksgranulat sammelt sich im kegelstumpfförmigen Auslaufteil (4) an und wird über den Feststoffaustritt (7) und einem mit dem Materialeintragssystem (23) baugleichen Materialaustragssystem (24), aber in Hochtemperaturausführung, einer wassergekühlten Kühlschnecke (25) zugeführt, auf Raumtemperatur abgekühlt und in Lagervorrichtungen zwischengelagert.

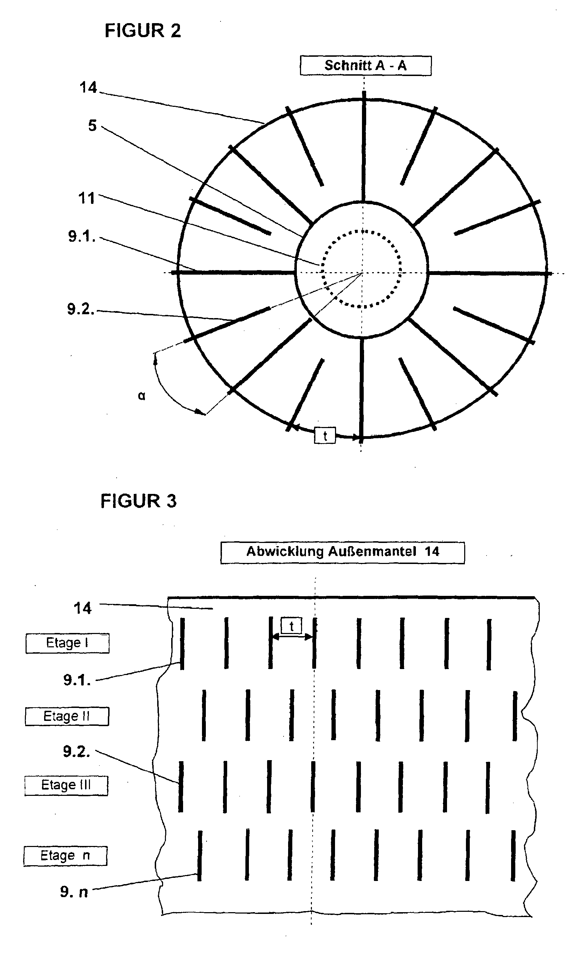

In der Figur 2 wird das erfindungsgemäße Verteilungsprinzip der langen und kurzen Heizplatten (9.1, 9.2) innerhalb des Thermalreaktors (1) dargestellt. Der Teilungsabstand t der Heizplatten (9.1, 9.2) am Umfang des Thermalreaktors (1) wird durch die Wärmeleitfähigkeit λ des zu verarbeitenden Granulatmaterials und der Granulatgröße bestimmt.

### Beispiel:

Die maximale Wärmeeindringtiefe in die Granulatschicht beträgt angenommen 100 mm und der Umfang des Thermalreaktors (1) beträgt 4800 mm, so ergibt sich eine Heizplattenanzahl von
n = 4 800 mm : 100 mm = 48 Heizplatten.

Der Teilungswinkel αₜ beträgt αₜ = 360 °: 48 Heizplatten = 7,5 ° Konstruktionsbedingt würden also 24 lange und 24 kurze Heizplatten (9.1; 9.2) für eine Heizungsetage benötigt werden. Die Anzahl und die Heizleistung der Heizplatten insgesamt, werden nach den allgemeinen Auslegungsregeln für Wärmetauscher berechnet.

In der Figur 3 wird in einer Abwicklung des Außenmantels (14) das versetzte Anordnungsprinzip der Heizplatten (9.1; 9.2) in den Heizungsetagen dargestellt. Die versetzte Anordnung der Heizplatten (9.1, 9.2) ist gut zu erkennen. Die Anordnung und Ausführung der elektrisch beheizten und radial am Außenmantel (14) befestigten Wärmetauscherplatten (9..9n) bewirken einen optimalen Wärmeeintrag in das Granulat, da sowohl der Teilungsabstand t der Wärmetauscherplatten (9..9n) in der Horizontalen, als auch der Abstand der Heizetagen in der Vertikalen und deren versetzte Anordnung von den zu verarbeitenden Granulatgrößen und Granulatart abhängig ausgelegt wird und dadurch zu sehr hohen Wirkungsgraden führt.

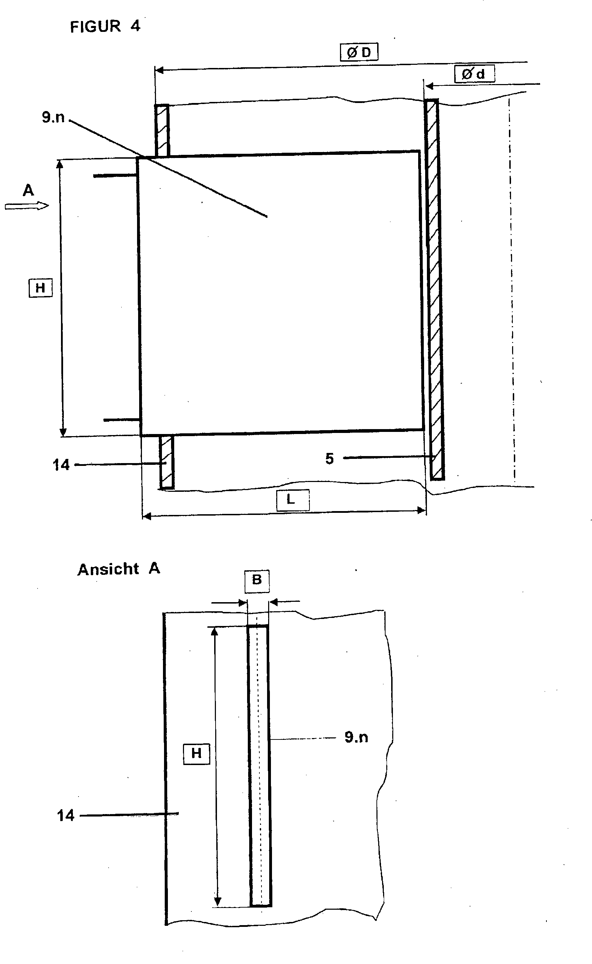

In der Figur 4 sind die Befestigungen der Heizplatten (9.1; 9.2) am Außenmantel (14) dargestellt. Die Heizplatten (9.1, 9.2) werden in Schlitze entsprechender Größe im Außenmantel (14) des Thermalreaktors (1) eingeschoben und können zur Wartung oder zum Austausch einzeln auch wieder aus dem Außenmantel (14) des Thermalreaktors (1) herausgezogen werden.

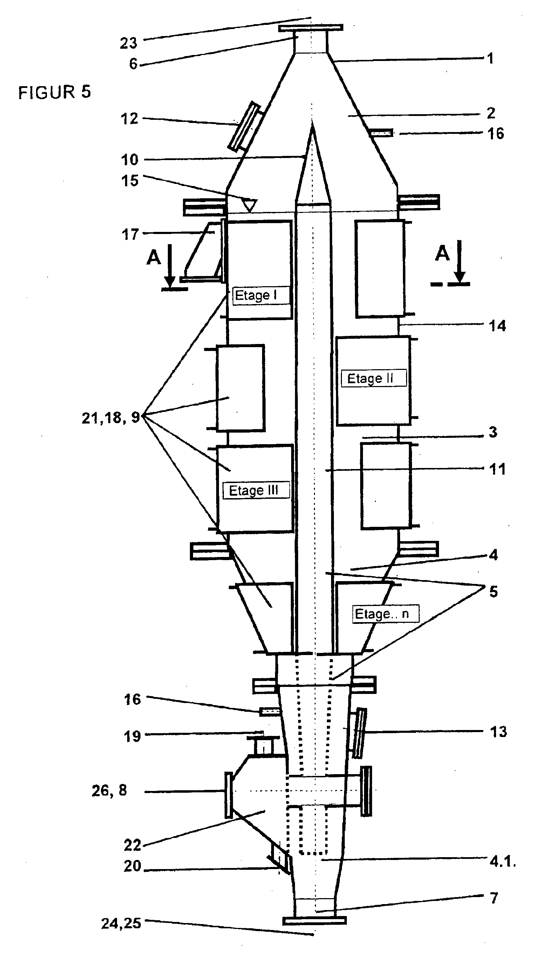

In der Figur 5 wird erfindungsgemäß ein Thermalreaktor (1) mit der Möglichkeit einer zusätzlichen katalytischen Behandlung der Kohlenwasserstoffdämpfe dargestellt. Prinzipiell sind der Aufbau und die Ausführung des Thermalreaktors (1) mit dem der Figur 1 vergleichbar. Nur das Auslaufteil (4) ist dahingehend modifiziert, daß sich in ihm eine zusätzliche Heizplattenreihe (9) befindet, die eine Temperatur von 600°C für die entstandenen Dämpfe garantieren. Im Auslaufteil (4.1) ist ein Schüttschichtfilter (22) für Katalysatoren dargestellt, in dem die Dämpfe an ihrem Entstehungsort im direkten Kontakt mit dem Katalysatorgranulat stehen. Die erforderlichen Temperaturen für die Crackvorgänge des Dampfes werden über das Prozeßleitsystem (21) gesteuert. Wichtig dabei sind die Einhaltung der Mindesttemperatur von ca. 550°C und ein Unterdruck von mindestens 50 mbar.

Da einige Bestandteile der Dämpfe bereits bei Temperaturen von ca. 450°C bis 500°C auszukondensieren beginnen und mit dem sich in der Anlage gebildeten Feinststaub eine zur Verkokung neigende Masse bilden, besteht die Gefahr des Zuwachsens der zur Polykondensationsanlage (26) führenden Dampfleitung. Als zusätzliche Schutzmaßnahmen gegen diese Erscheinungen sind elektrisch beheizte Heizmatten bzw. Heizdrähte mit einer lückenlosen Hochtemperatur-Isolierungsausführung sinnvoll.

Als Katalysatoren für den Schüttschichtfilter (22) haben sich die in der Petrochemie gebräuchlichen Mischkatalysatoren, wie zum Beispiel SiO₂/Al₂O₃, Cr₂O₃/Fe₂O₃ sowie Zeolithe bewährt.

Aus Festigkeitsgründen und wegen der erheblichen Längenausdehnung im Betriebszustand, erfolgt die Aufhängung des Reaktors (1) über Tragpratzen (17) an der Stelle der höchsten Zugfestigkeit, im oberen Teil des Heizungsbereiches (3).

Erfindungsgemäß erfolgt die Ausführung des Thermalreaktors (1) in geflanschter Form und Unterteilung in Verfahrensabschnitte. Diese Ausführungsform bietet folgende technische und technologische Vorteile wie zum Beispiel leichtere Fertigungs-, Reparatur und Austauschmöglichkeiten, ein besseres Handling beim Transport und der Montage, sowie eine hohe Flexibilität des Thermalreaktors (1) bezüglich des Einsatzes der zu verarbeitenden Produkte, der leichteren Korrektur bei Kapazitätserweiterungen und Änderungen bei der Art und Aufteilung der angestrebten Endprodukte.

Der konstruktive Aufbau des Thermalreaktors (1) wurde erfindungsgemäß bewußt sehr einfach gehalten und durch praktische Einrichtung für die Wartung und Instandsetzung reparaturfreundlich gestaltet, wie z.B. im oberen Reaktorteil (2) Mannlöcher (12) und im unteren Reaktorteil (4) Mannlöcher (13), sowie die leicht demontierbaren Ausführungen der inneren Einbauten (5), dem Materialverteiler (10) und dem zentralen Absaugrohr (11).

Mit diesem Thermolysereaktor ist ein umweltfreundliches, rückstandsfreies und energieautarkes Recyclingverfahren möglich, das sich durch hohe technologische Flexibilität bezüglich des Einsatzes der zu verarbeitenden Granulatgrößen, Materialarten, sowie leichterer Korrektur bei Kapazitätserweiterungen und Änderungen bei der Art und dem Verhältnis der Aufsplittung der Endprodukte auszeichnet.

Eine Eigennutzung des Permanentgases mit einem unteren Heizwert Hu von 30 bis 45 MJ/m³ und einer durchschnittlichen Methanzahl von 60 zur autarken Energieversorgung durch eine motorische Verstromung in einer Gasmotor-Generator-Einheit, üblicherweise in einem BHKW, ist möglich und der Feststoff, der sich aus ca. 45 bis 52 Gew.-% reinem Kohlenstoff in Form von Granulaten und Ruß, mit einer mittlere BET Oberfläche von 80 bis 120 m²/g, einem mittleren Heizwert Hu von ca. 23 bis 30 HJ/kg und aus ca. 10 bis 25 Gew.-% anorganischen Füllstoffen zusammensetzt, kann z.B. einer Wiederverwertung in der Reifen- und/oder Gummündustrie zugeführt werden.

Die beim Thermolyseverfahren im Thermalreaktor (1) und der Polykondensationsanlage (26) freigesetzten Thermolyseöle der unterschiedlichsten Fraktionen können Erdölraffinerien, der Kunststoff-, Farbstoff- oder Gummündustrie, Heizöl- oder Kraftstoffherstellern, sowie den Rußherstellern zur Weiterverarbeitung zugeführt werden.

### Bezugszeichenliste

- 1: Thermalreaktor
- 2: Einlaufteil
- 3: Heizzonenmittelteil
- 4: Auslaufteil
- 5: Innere Einbauten
- 6: Feststoffeintrittsstutzen
- 7: Feststoffaustritt
- 8: Dampfaustritt
- 9: Heizplatten
- 10: Materialverteiler
- 11: Zentrales Dampfabzugsrohr
- 12: Obere Mannlöcher
- 13: Untere Mannlöcher
- 14: Zylindrischer Außenmantel
- 15: Füllstandsmess- und Regeleinrichtung
- 16: Inertisierungsanschlüsse
- 17: Tragpratzen
- 18: Mess- Steuer- Regeleinrichtungen für Temperatur, Druck und Sauerstoffgehalt
- 19: Katalysatoreintrag
- 20: Katalysatoraustrag
- 21: Prozeßleitsystem (PLT) mit Speicher- Programmierbarer- Steuerung (SPS)
- 22: Schüttschichtfilter
- 23: Feststoffeintragssystem
- 24: Feststoffaustragssystem
- 25: Kühlschnecke
- 26: Polykondensationseinheit

## Patentansprüche

1. Thermalreaktor zum kontinuierlichen thermolytischen Recycling von Altreifen-, Vulkanisationsrückstands- und Altkunststoffgranulaten und ähnlichen Produkten, wobei der Thermalreaktor (1) ein Einlaufteil (2), ein Heizzonenmittelteil (3) und ein Auslaufteil (4) aufweist, die vertikal untereinander angeordnet sind, **dadurch gekennzeichnet,**
• **daß** im Heizzonenmittelteil (3) zentral im Thermalreaktor (1) ein Absaugrohr (11) angeordnet ist, dessen Manteloberfläche zahlreiche Bohrungen und/oder Schlitze zum Ableiten der entstehenden kurzkettigen Kohlenwasserstoffverbindungsdämpfe aufweist und wobei auf das Absaugrohr (11), übereinander angeordnete kegelförmige Glocken (5) aufgeschoben sind und wobei Mittel (8) zum Absaugen der Kohlenwasserstoffverbindungsdämpfe aus dem Absaugrohr (11) vorgesehen sind, und
• **daß** im Heizzonenmittelteil (3) der Außenmantel (14) eine Vielzahl von radial angeordneten Heizplatten (9) aufweist, die in den übereinander liegenden Heizetagen versetzt zueinander angeordnet sind.

2. Thermalreaktor gemäß Anspruch 1, **dadurch gekennzeichnet, daß** sowohl in einer Heizetage als auch von einer Heizetage zur benachbarten Heizetage kurze und lange Heizplatten (9) alternierend angeordnet sind.

3. Thermalreaktor gemäß Anspruch 1, **dadurch gekennzeichnet, daß** die Heizplatten (9) in Schlitze entsprechender Größe im Außenmantel (14) des Thermalreaktors (1) einschiebbar und aus diesen Schlitzen entnehmbar sind.

4. Thermalreaktor gemäß Anspruch 1, **dadurch gekennzeichnet, daß** die Heizplatten (9) elektrisch beheizbar sind.

5. Thermalreaktor gemäß Anspruch 1, **dadurch gekennzeichnet, daß** Mittel (21) zum Steuern des Temperaturprofils in dem Thermalreaktor (1) und zum individuellen Einstellen der Temperatur jeder Heizplatte (9) vorgesehen sind.

6. Thermalreaktor gemäß Anspruch 1, **dadurch gekennzeichnet, daß** die Mittel (8) zum Absaugen der Kohlenwasserstoffverbindungsdämpfe aus dem Absaugrohr (11) als Dampfaustrittsstutzen (8) ausgebildet sind, der mit einer Polykondensationseinheit (26) verbunden ist.

## Claims

1. Thermal reactor for the continuous thermolytic recycling of granules of scrap tyres, vulcanisation residues and waste plastics, and of similar products, said thermal reactor (1) featuring a feed portion (2), a central heating-zone portion (3) and a discharge portion (4) arranged vertically one below the other, **characterised in that**
• an extraction pipe (11) is located centrally in the central heating-zone portion (3) of the thermal reactor (1), the lateral surface of said extraction pipe featuring numerous holes and/or slits for withdrawal of the vaporized short-chain hydrocarbon compounds being formed, and the extraction pipe (11) having conical bells (5) that have been pushed onto it one above the other, and means (8) being provided for withdrawing the vaporized hydrocarbon compounds out of the extraction pipe (11), and
• the reactor's lateral surface (14) features a multiplicity of radially arranged heating plates (9) in the central heating-zone portion (3), said heating plates being arranged at the heating levels, which lie one above the other, such that the plates are mutually offset.

2. Thermal reactor according to claim 1, **characterised in that** short and long heating plates (9) are arranged alternately both within a heating level and from one heating level to the neighbouring heating level.

3. Thermal reactor according to claim 1, **characterised in that** the heating plates (9) can be pushed into, and withdrawn from, correspondingly dimensioned slots in the lateral surface (14) of the thermal reactor (1).

4. Thermal reactor according to claim 1, **characterised in that** the heating plates (9) can be heated electrically.

5. Thermal reactor according to claim 1, **characterised in that** means (21) to control the temperature profile in the thermal reactor (1) and to individually adjust the temperature of each heating plate (9) are provided.

6. Thermal reactor according to claim 1, **characterised in that** the means (8) for withdrawing the vaporized hydrocarbon compounds from the extraction pipe (11) is configured as a short vapour-discharge pipe (8), which is connected to a polycondensation unit (26).

## Revendications

1. Réacteur thermique pour le recyclage thermolytique en continu de granulés issus de pneus usagés, de résidus de vulcanisation et de matières plastiques usagées et autres produits similaires, le réacteur thermique (1) étant muni d'une partie d'admission (2), d'une partie intermédiaire de chauffage (3) et d'une partie de sortie (4), lesquelles parties sont disposées verticalement les unes en dessous des autres, **caractérisé en ce que**
- un conduit d'aspiration (11) est disposé dans la partie intermédiaire de chauffage (3) de façon centrée dans le réacteur thermique (1), l'enveloppe dudit conduit présentant de nombreux perçages et/ou fentes pour évacuer les vapeurs de composés d'hydrocarbure à courte chaîne qui se forment, et des cloches (5) de forme conique étant enfilées les unes au-dessus des autres sur le conduit d'aspiration (11) et des moyens (8) étant prévus pour aspirer les vapeurs de composés d'hydrocarbure hors du conduit d'aspiration (11), et
- **en ce que** l'enveloppe extérieure (14) présente dans la partie intermédiaire de chauffage (3) une pluralité de plaques de chauffage (9) disposées de façon radiale et qui sont disposées de façon décalée dans les étages de chauffage situés les uns au-dessus des autres.

2. Réacteur thermique selon la revendication 1, **caractérisé en ce que** des plaques de chauffage (9) courtes et longues sont disposées de façon alternée aussi bien dans un étage de chauffage que d'un étage de chauffage vers un étage de chauffage adjacent.

3. Réacteur thermique selon la revendication 1, **carartérisé en ce que** les plaques de chauffage (9) peuvent être insérées dans des fentes de taille correspondante réalisées dans l'enveloppe extérieure (14) du réacteur thermique (1) et peuvent être ressorties de ces fentes.

4. Réacteur thermique selon la revendication 1, **caractérisé en ce que** les plaques de chauffage (9) peuvent être chauffées électriquement.

5. Réacteur thermique selon la revendication 1, **caractérisé en ce que** des moyens (21) sont prévus pour commander le profil de température dans le réacteur thermique (1) et pour régler de façon individuelle la température de chaque plaque de chauffage (9).

6. Réacteur thermique selon la revendication 1, **caractérisé en ce que** les moyens (8) pour aspirer les vapeurs de composés d'hydrocarbure hors du conduit d'aspiration (11) sont conçus sous la forme de raccords de sortie de vapeur (8) qui sont reliés à une unité de polycondensation (26).
